(19) Europäisches Patentamt / European Patent Office / Office européen des brevets

(11) **EP 4 422 278 A1**

(12) **EUROPEAN PATENT APPLICATION**
published in accordance with Art. 153(4) EPC

(43) Date of publication:
**28.08.2024 Bulletin 2024/35**

(21) Application number: **22882892.7**

(22) Date of filing: **19.10.2022**

(51) International Patent Classification (IPC):
*H04W 36/08* (2009.01)     *H04W 36/00* (2009.01)

(52) Cooperative Patent Classification (CPC):
**G06N 3/006; G06N 3/048; G06N 3/08;**
**H04B 17/309; H04B 17/327; H04B 17/336;**
**H04W 36/00; H04W 36/08; H04W 36/16**

(86) International application number:
**PCT/CN2022/126133**

(87) International publication number:
**WO 2023/066287 (27.04.2023 Gazette 2023/17)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **21.10.2021 CN 202111229129**

(71) Applicant: **Vivo Mobile Communication Co., Ltd.**
**Dongguan, Guangdong 523863 (CN)**

(72) Inventors:
• **PAN, Xiang**
  **Dongguan, Guangdong 523863 (CN)**
• **QIN, Fei**
  **Dongguan, Guangdong 523863 (CN)**
• **YANG, Xiaodong**
  **Dongguan, Guangdong 523863 (CN)**
• **KIMBA DIT ADAMOU, Boubacar**
  **Dongguan, Guangdong 523863 (CN)**

(74) Representative: **Murgitroyd & Company**
**165-169 Scotland Street**
**Glasgow G5 8PL (GB)**

(54) **COMMUNICATION METHOD AND APPARATUS, TERMINAL, AND NETWORK DEVICE**

(57)     This application discloses a communication method and apparatus, a terminal, and a network device, and pertains to the field of communication technologies. The communication method in embodiments of this application includes: inputting, by a terminal, target information into an artificial intelligence AI model to obtain an output result, where the target information includes information of a service cell of the terminal and information of a neighboring cell, and the output result includes information about the terminal being handed over, being redirected, or reestablishing a connection to the neighboring cell; and determining, by the terminal based on the output result, whether to be handed over, be redirected, or reestablish a connection to the neighboring cell.

FIG. 2

**Description**

**CROSS-REFERENCE TO RELATED APPLICATION**

This application claims priority to Chinese Patent Application No. 202111229129.6, filed in China on October 21, 2021, which is incorporated herein by reference in its entirety.

**TECHNICAL FIELD**

This application pertains to the field of communication technologies, and specifically relates to a communication method and apparatus, a core-network device, a communication device.

**BACKGROUND**

Mobility management is an essential mechanism for cellular mobile communication systems, capable of assisting the 5th Generation (5th Generation, 5G) communication systems in achieving load balancing, providing a better experience for users, and improving the overall system performance. Mobility management is divided into two categories: mobility management in the connected state and mobility management in the non-connected state. Within the 5G system, mobility management in the connected state is mainly achieved through network-controlled handover and redirection processes; mobility management in the non-connected state is mainly achieved through terminal-controlled cell selection and cell reselection processes.

Currently, if a terminal moves to an area with poor network coverage of the service cell, it needs to be handed over to a new cell to ensure the continuity of the service as much as possible. However, the handover process in related technologies requires a series of steps, including measurement configuration, measurement result reporting, handover determination, handover requesting, handover permission, and reconfiguration of the handover, which leads to a long overall handover delay. Similarly, long interruption delays exist in the redirection and reestablishment processes. Moreover, if the new cell is not appropriately selected, the terminal may experience a radio link failure (Radio Link Failure, RLF) shortly after establishing a connection with the new cell and initiate connection reestablishment to the original service cell or another new cell.

**SUMMARY**

Embodiments of this application provide a communication method and apparatus, a terminal, and a network device that can solve the problem of connected state terminals being unable to be handed over, be redirected, or reestablish a connection to an appropriate cell in the related art.

According to a first aspect, a communication method is provided, including:

inputting, by a terminal, target information into an artificial intelligence (Artificial Intelligence, AI) model to obtain an output result, where the target information includes information of a service cell of the terminal and information of a neighboring cell, and the output result includes information about the terminal being handed over, being redirected, or reestablishing a connection to the neighboring cell; and

determining, by the terminal based on the output result, whether to be handed over, be redirected, or reestablish a connection to the neighboring cell.

According to a second aspect, a communication method is provided, including:

sending, by a first network device, first artificial intelligence AI model information, where the first AI model information is AI model information used for cell handover, cell redirection, or cell connection reestablishment.

According to a third aspect, a communication method is provided, including:
sending, by a second network device, information of a neighboring cell used for cell handover, cell redirection, or cell connection reestablishment, where the information of the neighboring cell includes at least one of the following:

a cell identity of the second network device;
a service type supported by the second network device;
radio resource information supported by the second network device;
a slicing type supported by the second network device;
an angle of the boresight direction of the second network device;

load information of the second network device;

a radio signal measurement result of the second network device; and

historical information generated by the second network device in a process of serving a terminal; where the second network device is a network device corresponding to the neighboring cell.

According to a fourth aspect, a communication apparatus is provided, including:

an acquisition module, configured to input target information into an artificial intelligence AI model to obtain an output result, where the target information includes information of a service cell of the terminal and information of a neighboring cell, and the output result includes information about the terminal being handed over, being redirected, or reestablishing a connection to the neighboring cell; and

a determination module, configured to determine, based on the output result, whether to be handed over, be redirected, or reestablish a connection to the neighboring cell.

According to a fifth aspect, a communication apparatus is provided, including:

a first sending module, configured to send first artificial intelligence AI model information, where the first AI model information is AI model information used for cell handover, cell redirection, or cell connection reestablishment.

According to a sixth aspect, a communication apparatus is provided, including:

a second sending module, configured to send information of a neighboring cell used for cell handover, cell redirection, or cell connection reestablishment, where the information of the neighboring cell includes at least one of the following:

a cell identity of the second network device;

a service type supported by the second network device;

radio resource information supported by the second network device;

a slicing type supported by the second network device;

an angle of the boresight direction of the second network device;

load information of the second network device;

a radio signal measurement result of the second network device; and

historical information generated by the second network device in a process of serving a terminal; where the second network device is a network device corresponding to the neighboring cell.

According to a seventh aspect, a terminal is provided, where the terminal includes a processor, a memory, and a program or instructions stored in the memory and capable of running on the processor, and when the program or instructions are executed by the processor, the steps of the method according to the first aspect are implemented.

According to an eighth aspect, a network device is provided, where the network device includes a processor, a memory, and a program or instructions stored in the memory and capable of running on the processor. When the program or instructions are executed by the processor, the steps of the method according to the second aspect or the third aspect are implemented.

According to a ninth aspect, a readable storage medium is provided, where the readable storage medium stores a program or instructions, and when the program or instructions are executed by a processor, the steps of the method according to the first, second or third aspect are implemented.

According to a tenth aspect, a chip is provided, where the chip includes a processor and a communication interface, the communication interface is coupled to the processor, and the processor is configured to run a program or instructions to implement the method according to the first, second, or third aspect.

According to an eleventh aspect, a computer program product is provided, where the computer program product is stored in a non-transient storage medium, and the computer program product is executed by at least one processor to implement the method according to the first, second, or third aspect.

According to a twelfth aspect, a communication device is provided, configured to execute the steps of the method according to the first, second, or third aspect.

In this embodiment of this application, the terminal inputs the target information into the artificial intelligence AI model to obtain the output result, where the target information includes the information of the service cell of the terminal and the information of the neighboring cell, and the output result includes the information of the neighboring cell to which the terminal is to be handed over, be redirected, or reestablish a connection; and the terminal determines, based on the output result, whether to be handed over, be redirected, or reestablish a connection to the neighboring cell. By utilizing the AI model, the terminal can be handed over to an appropriate cell, be redirected to an appropriate cell, or reestablish a connection to an appropriate cell. This can significantly improve the quality of mobility management, thereby enhancing the service experience.

## BRIEF DESCRIPTION OF DRAWINGS

FIG. 1 is a block diagram of a wireless communication system to which embodiments of this application are applicable;
FIG. 2 is a flowchart of a communication method according to an embodiment of this application;
FIG. 3 is another flowchart of a communication method according to an embodiment of this application;
FIG. 4 is another flowchart of a communication method according to an embodiment of this application;
FIG. 5 is a structural diagram of a communication apparatus according to an embodiment of this application;
FIG. 6 is another structural diagram of a communication apparatus according to an embodiment of this application;
FIG. 7 is another structural diagram of a communication apparatus according to an embodiment of this application;
FIG. 8 is a structural diagram of a communication device according to an embodiment of this application;
FIG. 9 is a structural diagram of a terminal according to an embodiment of this application; and
FIG. 10 is a structural diagram of a network-side device according to an embodiment of this application.

## DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

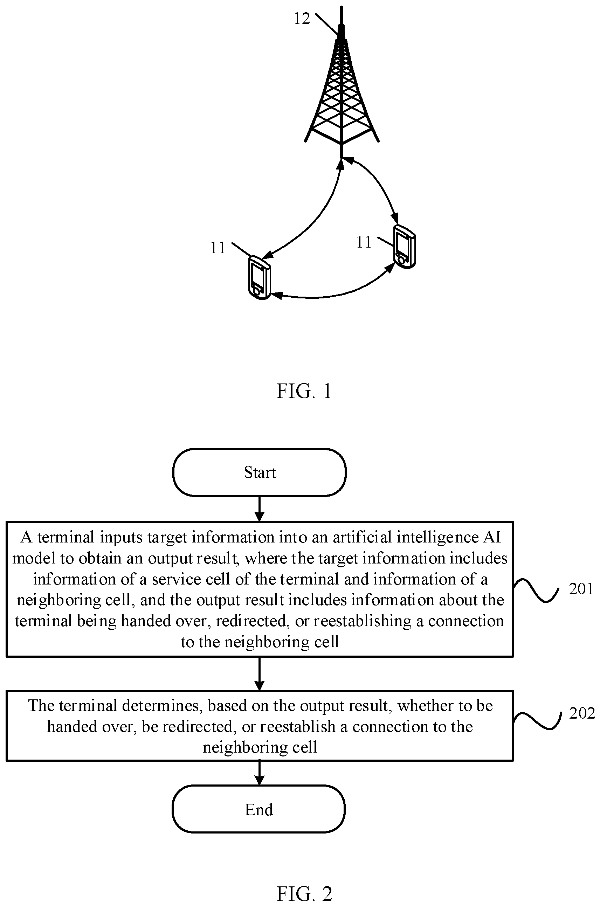

FIG. 1 is a block diagram of a wireless communication system to which embodiments of this application are applicable. The wireless communication system includes a terminal 11 and a network-side device 12. The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), or pedestrian user equipment (Pedestrian User Equipment, PUE), a smart appliance (a home appliance with a wireless communication function, for example, a refrigerator, a television, a washing machine, or furniture). The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, a game console, or the like. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a wireless local area network (Wireless Local Area Network, WLAN) access point, a wireless fidelity (Wireless Fidelity, WiFi) node, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, although the specific type of the base station is not limited.

The following describes in detail the communication method provided in the embodiments of this application through some embodiments and application scenarios thereof with reference to the accompanying drawings.

Referring to FIG. 2, FIG. 2 is a flowchart of a communication method according to an embodiment of this application. The communication method includes the following steps.

Step 201. A terminal inputs target information into an artificial intelligence AI model to obtain an output result, where the target information includes information of a service cell of the terminal and information of a neighboring cell, and the output result includes information about the terminal being handed over, being redirected, or reestablishing a connection to the neighboring cell.

Optionally, the mobility management AI model is composed of neural networks. The neural networks have strong expressive capabilities and can handle complex nonlinear problems. Neural networks consist of multiple neurons, with basic parameters including the number of network layers, the number of neurons, the selection of activation functions and loss functions.

Optionally, the neighboring cell is a cell adjacent to a current cell accessed by the terminal. The terminal can obtain the first artificial intelligence (Artificial Intelligence, AI) model information for cell handover, redirection, or connection reestablishment from the first network device and determine an AI model based on the first AI model information, with the terminal possibly being in a connected state. The connected state refers to the Radio resource control connected (Radio Resource Control connected, RRC-connected) state.

Optionally, the AI model can be trained by a network-side device or by the terminal, which is not specifically limited herein.

The first network device can be a network device of the service cell, or the first network device can be an operation administration and maintenance (Operation Administration and Maintenance, OAM) device or a network data analytics function (Network Data Analytics Function, NWDAF).

Step 202. The terminal determines, based on the output result, whether to be handed over, be redirected, or reestablish a connection to the neighboring cell.

The inference result (that is, the output result) of the AI model can be used to assist the terminal in determining whether to be handed over, be redirected, or reestablish a connection to the neighboring cell.

In this embodiment, the terminal inputs the target information into the artificial intelligence AI model to obtain the output result, where the target information includes the information of the service cell of the terminal and the information of the neighboring cell, and the output result includes the information of the neighboring cell to which the terminal is handed over, is redirected, or reestablishes a connection; and the terminal determines, based on the output result, whether to be handed over, be redirected, or reestablish a connection to the neighboring cell. By utilizing the AI model, the terminal can be handed over to an appropriate cell, be redirected to an appropriate cell, or reestablish a connection to an appropriate cell, avoiding the need for frequent handover or redirection to another cell caused by improper selection of a neighboring cell. This can significantly improve the quality of mobility management, thereby enhancing the service experience.

In an optional embodiment, the information of the service cell includes at least one of the following:

an angle of the boresight direction of a first network device;
load information of the first network device; and
a radio signal measurement result of the first network device, the first network device being a network device corresponding to the service cell.

The radio signal measurement result of the first network device includes at least one of the following:

a reference signal received power (Reference Signal Received Power, RSRP) of a reference signal of the first network device;
a reference signal received quality (Reference Signal Received Quality, RSRQ) of a reference signal of the first network device;
a signal to interference plus noise ratio (Signal to Interference plus Noise Ratio, SINR) of a reference signal of the first network device.

The load information of the first network device includes at least one of the following that:

a physical resource block (Physical Resource Block, PRB) utilization rate of the first network device;
the number of radio resource control RRC connections of the first network device, that is, the number of terminals in a connected state;

the number of stored inactive terminal sessions of the first network device; and
timestamp information of the first network device, which is timestamp information corresponding to the load prediction, for example, a future time corresponding to the load prediction, such as a system frame or a slot.

In an optional embodiment, the information of the neighboring cell includes at least one of the following:

a cell identity of a second network device;
a service type supported by the second network device;
radio resource information supported by the second network device;
a slicing type supported by the second network device;
an angle of the boresight direction of the second network device;
load information of the second network device;
a radio signal measurement result of the second network device; and
historical information generated by the second network device in a process of serving the terminal; where
the second network device is a network device corresponding to the neighboring cell.

Optionally, the radio signal measurement result of the second network device includes at least one of the following:

a RSRP of a reference signal of the second network device;
a RSRQ of a reference signal of the second network device; and
a signal to interference plus noise ratio SINR of a reference signal of the second network device.

Optionally, the historical information includes at least one of the following:

a historical handover report of the terminal at the second network device;
a historical radio link failure report of the terminal at the second network device;
a random access report of the terminal at the second network device; and
a historical service status of the terminal at the second network device.

In at least one embodiment of this application, the radio resource information supported by the second network device includes at least one of the following:

a bandwidth supported by the second network device;
whether the second network device supports carrier aggregation;
a carrier aggregation combination supported by the second network device;
whether the second network device supports dual connectivity; and
a dual connectivity combination supported by the second network device.

The load information of the second network device includes at least one of the following:

a physical resource block PRB utilization rate of the second network device;
the number of radio resource control RRC connections of the second network device, that is, the number of terminals in a connected state;
the number of stored inactive terminal sessions of the second network device; and
timestamp information of the second network device, which is timestamp information corresponding to the load prediction, for example, a future time corresponding to the load prediction, such as a system frame or a slot.

In at least one embodiment of this application, the target information further includes information of the terminal, and the information of the terminal includes at least one of the following:

state information of the terminal;
a prediction parameter of a service requirement type of the terminal; and
a list of historical service cell identities of the terminal, where the historical service cell identity can be represented by a cell identity such as a physical cell identification (Physical Cell Identification, PCI) or a cell global identifier (Cell Global Identifier, CGI).

The state information of the terminal includes at least one of the following:

position information of the terminal, such as a Global Positioning System (Global Positioning System, GPS) measurement result; and
mobility information of the terminal, such as a mobility direction and mobility speed.

In at least one optional embodiment of this application, the AI model is determined based on the first AI model information, and the first AI model information is used for indicating at least one of the following:

(1) an AI model identifier, where the identifier uniquely identifies a single AI model in the terminal (which can also be referred to as a terminal device in the following description);
(2) AI model status information, indicating whether the AI model is in an activated state when configured;
(3) an AI model activation condition;
(4) AI model operating cycle information, that is, how often the AI model is executed after activation;
(5) AI model validity period, where after the terminal device receives the AI model, it starts a timer (with an initial value being the AI model validity period), and when the timer duration exceeds the AI model validity period, the AI model becomes invalid; optionally, after the validity period, the terminal device can release the AI model;
(6) AI model valid area, where after the terminal device receives the first AI model information, the AI model is valid in a case that the terminal device is within the valid area; in a case that the terminal device moves out of the valid area, the configuration becomes invalid; optionally, after moving out of the valid area, the terminal device can release the AI model;
(7) AI model requested time-frequency resources, that is, the terminal device can use these time-frequency resources to request the AI model (for example, request a new AI model in a case that the AI model is invalid) through random access;
(8) AI model structure information, including the specific type of AI model (such as Gaussian processes, support vector machines, and various neural network methods.) and the specific structure of the model (such as the number of layers in the neural network, the number of neurons in each layer, and activation functions);
(9) AI model parameter information, that is, the hyperparameter configuration of the AI model;
(10) AI model data processing method information, that is, the preprocessing of input parameters before being input into the AI model, including but not limited to normalization, upsampling, downsampling, and the like;
(11) first description information related to AI model input parameters, where the first description information includes a default identifier for each input parameter; for example, each input parameter is associated with a default identifier, and in a case that the default identifier indicates that the input parameter can be omitted, the parameter need not be input if it cannot be obtained;
(12) default values for the AI model input parameters, that is, in a case that the terminal device cannot obtain the required input values, these default values can be used as inputs;
(13) second description information related to AI model output parameters, where the second description information can describe the output parameters, for example, in a case that a first output parameter has an output value of A, it represents a first meaning; in a case that the first output parameter has an output value of B, it represents a second meaning.

In an optional embodiment, the AI model activation condition includes at least one of the following that:

an activation message including the identifier of the AI model is received; for example, activated by the first network device through a message or signaling carrying the identifier of the AI model;
a wireless network failure message indicated by the physical layer is received; that is, the AI model is activated after the physical layer indicates a wireless network failure, such as activation together with T310;
a radio link failure occurs; that is, the AI model is activated after a radio link failure occurs, such as activation after a radio link failure RLF or handover failure (Handover Failure, HOF);
the reference signal received power RSRP of a reference signal of the first network device is less than or equal to a first threshold; that is, the AI model is activated in a case that the RSRP of the first network device reaches the first threshold; and
the RSRP of a reference signal of the second network device is greater than or equal to a second threshold; that is, the AI model is activated in a case that the RSRP of the second network device reaches the second threshold.

It should be noted that after the AI model is activated, the terminal no longer uses the original method for cell handover, redirection, or connection reestablishment, but adopts the cell handover, redirection, or reestablishment method provided by this application, that is, based on the first AI model information for cell handover, redirection, or connection reestablishment.
In an optional embodiment, the AI model operating cycle information includes at least one of the following:

the operating cycle of the terminal running the AI model, where this operating cycle can be a fixed value T, that is, the terminal device should run the AI model according to a fixed cycle;

a first parameter related to the radio signal measurement result of the terminal, where the first parameter is used to calculate the operating cycle; that is, the operating cycle of the terminal running the AI model is related to the radio signal measurement result of the terminal; for example, the lower the RSRP of the first network device measured by the terminal, the shorter the operating cycle of the AI model; for example, the first parameter is:

$$\begin{cases} RSRP \in (RSRP_{ref}, 0], & nT \\ RSRP \in (RSRP_{ref} - \Delta, \ RSRP_{ref}], & (n-1)T \\ RSRP \in (RSRP_{ref} - 2\Delta, \ RSRP_{ref} - \Delta], & (n-2)T \\ \quad \cdots \cdots \end{cases}$$

where RSRP is the RSRP of the first network device, T is a fixed cycle value, and $RSRP_{ref}$, n, and $\Delta$ are predetermined values; and

a second parameter related to the mobility speed of the terminal, where the second parameter is used to calculate the operating cycle; that is, the operating cycle of the terminal running the AI model is related to the mobility speed of the terminal; for example, the greater the mobility speed of the terminal, the shorter the operating cycle of the AI model; for example, the second parameter is:

$$\begin{cases} v \in [0, v_{ref}], & nT \\ v \in (v_{ref}, \ 2v_{ref}], & (n-1)T \\ v \in (2v_{ref}, \ 3v_{ref}], & (n-2)T \end{cases}$$

where v is the mobility speed of the terminal, T is a fixed cycle value, and $v_{ref}$ and n are predetermined values.

Optionally, the default values for the AI model input parameters include at least one of the following:

a default value of the cell identity of the second network device;
a default value of the state information of the terminal;
a default value of the radio signal measurement result;
a default value of the historical information;
a default value of the network load information;
a default value of the service type supported by the second network device;
a default value of the slicing type supported by the second network device;
a default value of the radio resource information supported by the second network device;
a default value of the angle of the boresight direction of the first network device;
a default value of the angle of the boresight direction of the second network device; and
a default value of the prediction parameter of the service requirement type of the terminal.

It should be noted that the input default values of the mobility management AI model can be configured in the related information of the mobility management AI model or can be specified by the protocol, which is not specifically limited herein.

In an implementation, the output result includes indication information, and the indication information is used for indicating whether to be handed over, be redirected, or reestablish a connection to the neighboring cell.

Further, the output result further includes at least one of the following:

predicted position information of the terminal;
whether the terminal needs to send a measurement report, the measurement report including at least one of the following: historical position information of the terminal, a radio signal measurement result, and the predicted position information of the terminal;
a sending time of the measurement report; for example, a sending time of historical position information of the terminal, a sending time of the radio signal measurement result of the terminal, a sending time of predicted position information of the terminal; where the above three sending times can be the same (that is, reported at the same time), or different (that is, reported separately), which is not specifically limited herein;

a cell identity of the neighboring cell, where the cell identity can be represented by a cell ID such as a physical cell identification (Physical Cell Identification, PCI) or a cell global identifier (Cell Global Identifier, CGI);

a handover time of handover to the neighboring cell;

a confidence coefficient for handover to the neighboring cell;

a success probability of handover to the neighboring cell;

a redirection time of redirection to the neighboring cell;

a confidence coefficient for redirection to the neighboring cell;

a success probability of redirection to the neighboring cell;

a reestablishment time of reestablishing a connection to the neighboring cell;

a confidence coefficient for reestablishing a connection to the neighboring cell; and

a success probability of reestablishing a connection to the neighboring cell.

In a case that the confidence coefficient is greater than a confidence threshold, the output result is to be handed over, be redirected, or reestablish a connection to the neighboring cell. The confidence threshold can be configured by the first network device or determined according to the protocol specifications.

It should be noted that the above sending time, handover time, redirection time, or reestablishment time can be a future moment, that is, the AI model can be used for predicting behavior at a future time, such as a future moment at which the terminal needs to be handed over to a certain cell, or a future moment at which the terminal needs to report a measurement report.

In at least one embodiment of this application, the predicted position information of the terminal includes at least one of the following:

absolute position information, such as latitude and longitude;

relative position information, such as direction and distance relative to a current position of the terminal; and

timestamp information corresponding to the predicted position; such as the future time corresponding to the predicted position, such as a certain system frame or time slot.

In at least one embodiment of this application, the measurement report further includes at least one of the following:

an AI model identifier;

a default list of AI model input parameters; where this default list is used to indicate which input parameters of the AI model are default; and

a default value list of default values used for the AI model input parameters; where this default value list is used to indicate which inputs of the AI model use default values.

In an optional embodiment, at least one of the foregoing mobility management AI model identifier, default input parameter information, and input default value information can be sent together with the historical position information of the terminal, or together with the radio signal measurement result of the terminal, or together with the predicted position information of the terminal, which is not specifically limited herein.

In another optional embodiment, the condition for whether the terminal reports the predicted position information can be an inference result of the AI model (for example, if the AI model outputs predicted position information and a sending time of the predicted position information, then the terminal reports the predicted position information at the corresponding sending time), or can be a network indication, for example, if a measurement configuration issued by the first network device indicates that the terminal needs to include the predicted position information of the terminal in the measurement report, then the terminal needs to report the predicted position information.

The AI model input parameters include at least one of the following:

a cell identity of the second network device, where the cell identity of the second network device can be represented by a cell identity such as a physical cell identification (Physical Cell Identification, PCI) or a cell global identifier (Cell Global Identifier, CGI);

state information of the terminal; that is, the self-status information of the terminal device;

a radio signal measurement result;

historical information;

load information;

a service type supported by the second network device;

radio resource information supported by the second network device;

a slicing type supported by the second network device;
the angle of the boresight direction of the first network device;
the angle of the boresight direction of the second network device; and
a prediction parameter of a service requirement type of the terminal.

In an optional embodiment, the method further includes:
sending, by the terminal, a measurement report based on the output result; where optionally, the content of this measurement report is used to assist the network-side device in selecting a cell for the terminal for handover, redirection, or connection reestablishment.

In at least one optional embodiment of this application, before the determining, by the terminal, to be handed over to the neighboring cell, the method further includes:
sending, by the terminal, a handover request or indication to a first network device, where the handover request or indication includes at least one of the following:

a cell identity of the neighboring cell, where the cell identity can be represented by a cell ID such as a physical cell identification (Physical Cell Identification, PCI) or a cell global identifier (Cell Global Identifier, CGI).
a RSRP of a reference signal of a second network device;
a RSRQ of a reference signal of the second network device;
a SINR of a reference signal of the second network device;
predicted position information of the terminal;
a handover time;
a confidence coefficient for handover; for example, there are multiple neighboring cells available for handover, each with a corresponding weight, the sum of weights for all neighboring cells can be 1, and upon receiving relevant weights, the first network device can select a target cell for the terminal based on these weights;
an AI model identifier;
a default list of AI model input parameters; and
a default value list of default values used for the AI model input parameters.

The first network device is a network device corresponding to the service cell, and the second network device is a network device corresponding to the neighboring cell.

In an optional embodiment, the terminal is handed over to the second network device or sends a handover request or indication to the first network device only if the confidence coefficient for handover or the success probability of handover exceeds a third threshold, where the third threshold can be configured by the network or specified by the protocol.

In at least one optional embodiment of this application, before the determining, by the terminal, to be directed to the neighboring cell, the method further includes:
sending, by the terminal, a redirection request or indication to the first network device, where the redirection request or indication includes at least one of the following:

a cell identity of the neighboring cell, where the cell identity can be represented by a cell ID such as a physical cell identification (Physical Cell Identification, PCI) or a cell global identifier (Cell Global Identifier, CGI).
a RSRP of a reference signal of a second network device;
a RSRQ of a reference signal of the second network device;
a SINR of a reference signal of the second network device;
predicted position information of the terminal;
a redirection time;
a confidence coefficient for redirection; for example, there are multiple neighboring cells available for redirection, each with a corresponding weight, the sum of weights for all neighboring cells can be 1, and upon receiving relevant weights, the first network device can select a target cell for the terminal based on these weights;
a success probability of redirection;
an AI model identifier;
a default list of AI model input parameters; and
a default value list of default values used for the AI model input parameters.

The first network device is a network device corresponding to the service cell, and the second network device is a network device corresponding to the neighboring cell.

In an optional embodiment, the terminal is redirected to the second network device or sends a redirection request or indication to the first network device only if the confidence coefficient for redirection or the success probability of redirection exceeds a fourth threshold, where the fourth threshold can be configured by the network or specified by the protocol.

In summary, in this embodiment, the terminal inputs the target information into the artificial intelligence AI model to obtain the output result, where the target information includes the information of the service cell of the terminal and the information of the neighboring cell, and the output result includes the information of the neighboring cell to which the terminal is handed over, be redirected, or reestablishes a connection; and the terminal determines, based on the output result, whether to be handed over, be redirected, or reestablish a connection to the neighboring cell. By utilizing the AI model, the terminal can be handed over to an appropriate cell, be redirected to an appropriate cell, or reestablish a connection to an appropriate cell, avoiding the need for frequent handover or redirection to another cell caused by improper selection of a neighboring cell. This can significantly improve the quality of mobility management, thereby enhancing the service experience.

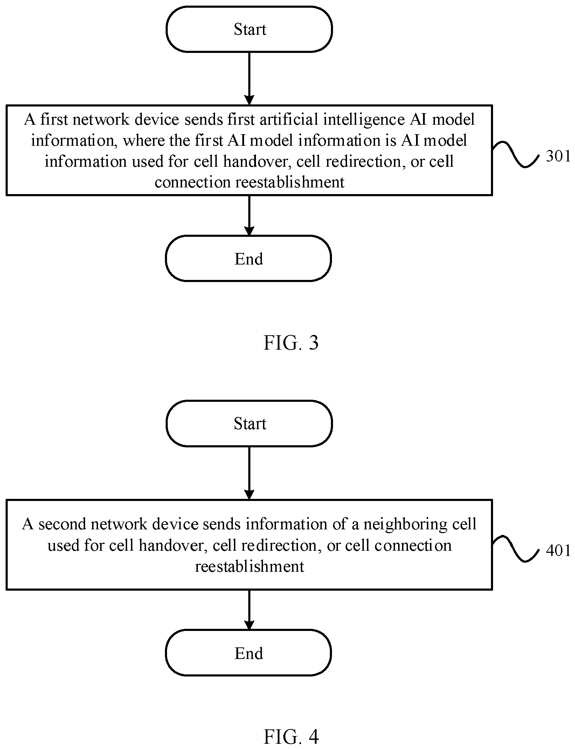

Referring to FIG. 3, FIG. 3 is another flowchart of a communication method according to an embodiment of this application. The communication method includes the following steps.

Step 301. A first network device sends first artificial intelligence AI model information, where the first AI model information is AI model information used for cell handover, cell redirection, or cell connection reestablishment.

In this embodiment, the first network device sends the first AI model information to the terminal to assist the terminal in cell handover, cell redirection, or cell connection reestablishment. This can enable the terminal to be handed over, be redirected, or reestablish a connection to an appropriate cell, avoiding the need for frequent handover or redirection to another cell caused by improper cell selection, thereby improving communication performance.

In an optional embodiment, the first AI model information is used to indicate at least one of the following:

an AI model identifier;
AI model status information;
an AI model activation condition;
AI model operating cycle information;
an AI model validity period;
an AI model valid area;
AI model requested time-frequency resources;
AI model structure information;
AI model parameter information;
AI model data processing method information;
first description information related to AI model input parameters, the first description information including a default identifier for each of the input parameters;
default values for the AI model input parameters; and
second description information related to AI model output parameters.

Optionally, the AI model activation condition includes at least one of the following that:

an activation message including an AI model identifier is received;
a wireless network failure message indicated by a physical layer is received;
a radio link failure occurs;
the reference signal received power RSRP of a reference signal of the first network device is less than or equal to a first threshold; and
the RSRP of a reference signal of the second network device is greater than or equal to a second threshold.

Optionally, the AI model operating cycle information includes at least one of the following:

an operating cycle of the terminal running the AI model;
a first parameter related to the radio signal measurement result of the terminal, the first parameter being used to calculate the operating cycle; and
a second parameter related to a mobility speed of the terminal, the second parameter being used to calculate the operating cycle.

Optionally, the default values for the AI model input parameters include at least one of the following:

a default value of a cell identity of the second network device;
a default value of state information of the terminal;
a default value of a radio signal measurement result;

a default value of historical information;
a default value of network load information;
a default value of the service type supported by the second network device;
a default value of the slicing type supported by the second network device;
a default value of the radio resource information supported by the second network device;
a default value of the angle of the boresight direction of the first network device;
a default value of the angle of the boresight direction of the second network device; and
a default value of the prediction parameter of the service requirement type of the terminal.

In an implementation, the method further includes:
sending, by the first network device, load information to a terminal.
The load information includes at least one of the following:

a physical resource block PRB utilization rate;
a radio resource control RRC connection count;
the number of stored inactive terminal sessions; and
timestamp information.

In another implementation, the method further includes:
receiving, by the first network device, a handover request or indication sent by a terminal, where the handover request or indication includes at least one of the following:

a cell identity of the neighboring cell;
a RSRP of a reference signal of a second network device;
a RSRQ of a reference signal of the second network device;
a signal to interference plus noise ratio SINR of a reference signal of the second network device;
predicted position information of the terminal;
a handover time;
a confidence coefficient for handover;
a success probability of handover;
an AI model identifier;
a default list of AI model input parameters; and
a default value list of default values used for the AI model input parameters.

The first network device is a network device corresponding to the service cell, and the second network device is a network device corresponding to the neighboring cell.
In another implementation, the method further includes:
receiving, by the first network device, a redirection request or indication sent by the terminal, where the redirection request or indication includes at least one of the following:

a cell identity of the neighboring cell;
a RSRP of a reference signal of a second network device;
a RSRQ of a reference signal of the second network device;
a signal to interference plus noise ratio SINR of a reference signal of the second network device;
predicted position information of the terminal;
a redirection time;
a confidence coefficient for redirection;
a success probability of redirection;
an AI model identifier;
a default list of AI model input parameters; and
a default value list of default values used for the AI model input parameters.

In this embodiment, the first network device sends the first AI model information to the terminal to assist the terminal in cell handover, cell redirection, or cell connection reestablishment. This can enable the terminal to be handed over, be redirected, or reestablish a connection to an appropriate cell, avoiding the need for frequent handover or redirection to another cell caused by improper cell selection, thereby improving communication performance.
Referring to FIG. 4, FIG. 4 is another flowchart of a communication method according to an embodiment of this application. The communication method includes the following steps.

Step 401. A second network device sends information of a neighboring cell used for cell handover, cell redirection, or cell connection reestablishment, where the information of the neighboring cell includes at least one of the following:

a cell identity of the second network device;
a service type supported by the second network device;
radio resource information supported by the second network device;
a slicing type supported by the second network device;
an angle of the boresight direction of the second network device;
load information of the second network device;
a radio signal measurement result of the second network device; and
historical information generated by the second network device in a process of serving a terminal; where
the second network device is a network device corresponding to the neighboring cell.

In this embodiment, the second network device sends the information of the neighboring cell to the terminal to assist the terminal in cell handover, cell redirection, or cell connection reestablishment. This can enable the terminal to be handed over, be redirected, or reestablish a connection to an appropriate cell, avoiding the need for frequent handover or redirection to another cell caused by improper cell selection, thereby improving communication performance.
The load information includes at least one of the following:

a physical resource block PRB utilization rate;
a radio resource control RRC connection count;
the number of stored inactive terminal sessions; and
timestamp information.

Optionally, the radio resource information supported by the second network device includes at least one of the following:

a bandwidth supported by the second network device;
whether the second network device supports carrier aggregation;
a carrier aggregation combination supported by the second network device;
whether the second network device supports dual connectivity; and
a dual connectivity combination supported by the second network device.

Optionally, the radio signal measurement result of the second network device includes at least one of the following:

a RSRP of a reference signal of the second network device;
a RSRQ of a reference signal of the second network device; and
a signal to interference plus noise ratio SINR of a reference signal of the second network device.

Optionally, the historical information includes at least one of the following:

a historical handover report of the terminal at the second network device;
a historical radio link failure report of the terminal at the second network device;
a random access report of the terminal at the second network device; and
a historical service status of the terminal at the second network device.

In summary, in this embodiment, the second network device sends the information of the neighboring cell to the terminal to assist the terminal in cell handover, cell redirection, or cell connection reestablishment. This can enable the terminal to be handed over, be redirected, or reestablish a connection to an appropriate cell, avoiding the need for frequent handover or redirection to another cell caused by improper cell selection, thereby improving communication performance.
In order to more clearly describe the communicatiion method provided in this embodiment of this application, the following provides description in detail in combination with several examples:

Example 1: measurement report reporting based on mobility management AI model

1. User equipment (User Equipment, UE) receives a reconfiguration message from a service cell, including the reconfiguration message includes information related to the mobility management AI model, where the model can be in an active or inactive state.

Optionally, the related information indicates that the AI model is used to generate predicted position results and determine whether a measurement report needs to be sent.

2. The UE receives the reconfiguration message delivered by the service cell, including an AI model identification ID and a predicted position information identifier of the terminal device.

The AI model identification ID is used to activate the AI model, and the predicted position information identifier of the terminal device is used to indicate whether it is necessary to carry trajectory prediction information in the measurement report;

3. The UE monitors current air interface parameters and performs model inference according to the AI model cycle. In a case that the AI model inference result is to report the measurement result, then UE sends a measurement report to the service cell, including an ID and a synchronization signal/physical broadcast channel signal block (Synchronization Signal and PBCH block, SSB) RSRP or RSRQ of the service cell and an ID and an SSB RSRP of the neighboring cell.

4. In a case that step 1 contains AI model information for generating a predicted position, and step 2 indicates that it is necessary to carry predicted position information in the measurement report, then UE carries predicted position information in the measurement report, where the predicted position information can be obtained based on a current position, speed, and direction of movement of the UE and output by the AI model.

Example 2: handover or redirection based on mobility management AI model

1. UE receives a reconfiguration message from the service cell, including information related to the mobility management AI model, where the model can be in an active or inactive state, and the related information indicates that the AI model is used to determine whether handover/redirection is to be performed.

2. The UE receives a reconfiguration message from the service cell, including an AI model identification ID and cell information of multiple candidate cells (including candidate cell load prediction information), where the AI model identification ID is associated with the candidate cell ID.

The AI model identification ID is used to activate the AI model.

3. The UE monitors current air interface parameters, where in a case that the AI model inference result is to be handed over/redirected to a candidate cell at a certain moment, then UE can:

(a) directly be handed over/redirected based on cell information of the candidate cell at the corresponding moment;

(b) send a handover/redirect indication to the service cell and then be handed over/redirected based on the cell information of the candidate cell; and

(c) send a handover/redirection request to the service cell.

4. If UE performs 3b, then the handover/redirection indication sent can carry a cell ID of a target cell.

5. If UE performs 3c, then the handover/redirection request can carry a cell ID of a candidate cell, a measurement result, predicted position information, a confidence coefficient of the candidate cell, and the like.

6. If the UE performs 3c, then after receiving the handover/redirection request, the service cell determines, based on the information carried in the request, a cell for handover and redirection, and sends information of the cell to the UE.

Optionally, the service cell side can also have an AI model, and the information carried in the above request can serve as the input for the AI model, thereby inferring the cell for handover/redirection by the AI model.

7. The UE receives feedback from the service cell and performs handover/redirection based on the feedback.

Example 3: connection reestablishment based on mobility management AI model

1. UE receives a reconfiguration message from the service cell, including information related to the mobility management AI model, where the model can be in an active or inactive state, and the related information indicates that the AI model is used to determine whether connection reestablishment is to be performed.

2. The UE receives a reconfiguration message from the service cell, including an AI model identification ID, cell information of multiple candidate cells (including candidate cell load prediction information), where the AI model identification ID is associated with the candidate cell ID and has an activation condition identifier, such as activating the AI model after T310 starts.

3. In a case that a lower layer desynchronization occurs, that is, T310 starts, then UE activates the AI model for determining connection reestablishment, monitors the current air interface parameters, and if the AI model inference result is to reestablish a connection to a certain candidate cell at a certain moment, then the UE can directly reestablish a connection based on the cell information of the candidate cell at the corresponding moment.

It should be noted that the communication method provided by the embodiments of this application can be executed by a communication apparatus or by a control module within the communication apparatus configured to execute the communication method. In the embodiments of this application, the communication apparatus performing the communication method is used to describe the communication apparatus provided in the embodiments of this application.

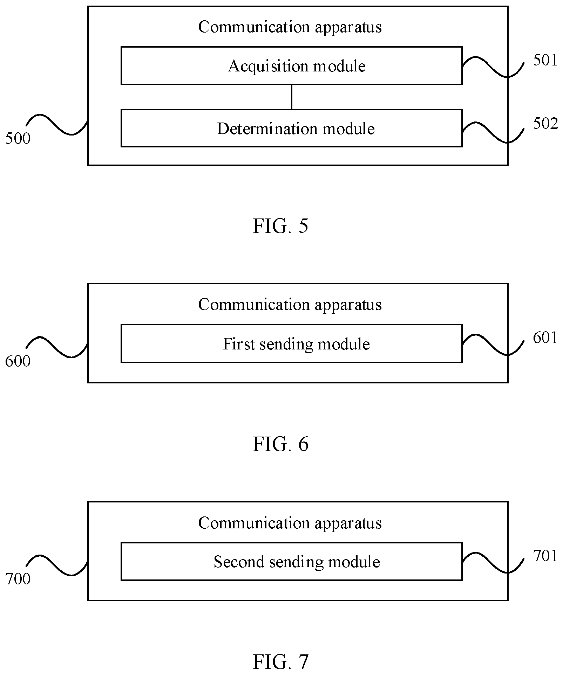

Referring to FIG. 5, FIG. 5 is a communication apparatus 300 according to an embodiment of this application, including:

an acquisition module 501, configured to input target information into an artificial intelligence AI model to obtain an output result, where the target information includes information of a service cell of the terminal and information of a neighboring cell, and the output result includes information about the terminal being handed over, being redirected, or reestablishing a connection to the neighboring cell; and
a determination module 502, configured to determine, based on the output result, whether to be handed over, be redirected, or reestablish a connection to the neighboring cell.

In an optional embodiment, the information of the service cell includes at least one of the following:

an angle of the boresight direction of a first network device;
load information of the first network device; and
a radio signal measurement result of the first network device, the first network device being a network device corresponding to the service cell.

In an optional embodiment, the information of the neighboring cell includes at least one of the following:

a cell identity of a second network device;
a service type supported by the second network device;
radio resource information supported by the second network device;
a slicing type supported by the second network device;
an angle of the boresight direction of the second network device;
load information of the second network device;
a radio signal measurement result of the second network device; and
historical information generated by the second network device in a process of serving the terminal.

The second network device is a network device corresponding to the neighboring cell.
In an optional embodiment of this application, the target information further includes information of the terminal, and the information of the terminal includes at least one of the following:
state information of the terminal;

a prediction parameter of a service requirement type of the terminal; and
a list of historical service cell identities of the terminal.

In an optional embodiment, the state information of the terminal includes at least one of the following:

position information of the terminal; and
mobility information of the terminal.

In an optional embodiment, the radio signal measurement result of the first network device includes at least one of the following:

a reference signal received power RSRP of a reference signal of the first network device;
a reference signal received quality RSRQ of a reference signal of the first network device; and
a signal to interference plus noise ratio SINR of a reference signal of the first network device.

In an optional embodiment, the radio signal measurement result of the second network device includes at least one of the following:

a RSRP of a reference signal of the second network device;
a RSRQ of a reference signal of the second network device; and
a signal to interference plus noise ratio SINR of a reference signal of the second network device.

In an optional embodiment, the historical information includes at least one of the following:

a historical handover report of the terminal at the second network device;
a historical radio link failure report of the terminal at the second network device;
a random access report of the terminal at the second network device; and
a historical service status of the terminal at the second network device.

In an optional embodiment, the load information includes at least one of the following:

a physical resource block PRB utilization rate;
a radio resource control RRC connection count;
the number of stored inactive terminal sessions; and
timestamp information.

In an optional embodiment, the radio resource information supported by the second network device includes at least one of the following:

a bandwidth supported by the second network device;
whether the second network device supports carrier aggregation;
a carrier aggregation combination supported by the second network device;
whether the second network device supports dual connectivity; and
a dual connectivity combination supported by the second network device.

In an optional embodiment, the AI model is determined according to the first AI model information, and the first AI model information is used to indicate at least one of the following:

an AI model identifier;
AI model status information;
an AI model activation condition;
AI model operating cycle information;
an AI model validity period;
an AI model valid area;
AI model requested time-frequency resources;
AI model structure information;
AI model parameter information;
AI model data processing method information;
first description information related to AI model input parameters, the first description information including a default identifier for each of the input parameters;
default values for the AI model input parameters; and
second description information related to AI model output parameters.

In an optional embodiment, the AI model activation condition includes at least one of the following that:

an activation message including an AI model identifier is received;
a wireless network failure message indicated by a physical layer is received;
a radio link failure occurs;
the reference signal received power RSRP of a reference signal of the first network device is less than or equal to a first threshold; and
the RSRP of a reference signal of the second network device is greater than or equal to a second threshold.

In an optional embodiment, the AI model operating cycle information includes at least one of the following:

an operating cycle of the terminal running the AI model;

a first parameter related to the radio signal measurement result of the terminal, the first parameter being used to calculate the operating cycle; and

a second parameter related to a mobility speed of the terminal, the second parameter being used to calculate the operating cycle.

In an optional embodiment, the output result includes indication information, and the indication information is used for indicating whether to be handed over, be redirected, or reestablish a connection to the neighboring cell.

In an optional embodiment, the output result further includes at least one of the following:

predicted position information of the terminal;

whether the terminal needs to send a measurement report, the measurement report including at least one of the following: historical position information of the terminal, a radio signal measurement result, and the predicted position information of the terminal;

a sending time of the measurement report;

a cell identity of the neighboring cell;

a handover time of handover to the neighboring cell;

a confidence coefficient for handover to the neighboring cell;

a success probability of handover to the neighboring cell;

a redirection time of redirection to the neighboring cell;

a confidence coefficient for redirection to the neighboring cell;

a success probability of redirection to the neighboring cell;

a reestablishment time of reestablishing a connection to the neighboring cell;

a confidence coefficient for reestablishing a connection to the neighboring cell; and

a success probability of reestablishing a connection to the neighboring cell.

In an optional embodiment, in a case that the confidence coefficient is greater than a confidence threshold, the output result is to be handed over, be redirected, or reestablish a connection to the neighboring cell.

In an optional embodiment, the prediction position information of the terminal includes at least one of the following:

absolute position information;

relative position information; and

timestamp information corresponding to the predicted position.

In an optional embodiment, the measurement report further includes at least one of the following:

an AI model identifier;

a default list of AI model input parameters; and

a default value list of default values used for the AI model input parameters.

In an optional embodiment of this application, before the terminal determines to be handed over to the neighboring cell, the apparatus further includes:

a first request sending module, configured to send a handover request or indication to the first network device, where the handover request or indication includes at least one of the following:

a cell identity of the neighboring cell;

a RSRP of a reference signal of a second network device;

a RSRQ of a reference signal of the second network device;

a signal to interference plus noise ratio SINR of a reference signal of the second network device;

predicted position information of the terminal;

a handover time;

a confidence coefficient for handover;

a success probability of handover;

an AI model identifier;

a default list of AI model input parameters; and

a default value list of default values used for the AI model input parameters.

The first network device is a network device corresponding to the service cell, and the second network device is a network device corresponding to the neighboring cell.

In an optional embodiment of this application, before the terminal determines to be redirected to the neighboring cell, the apparatus further includes:

a second request sending module, configured to send a redirection request or indication to the first network device, where the redirection request or indication includes at least one of the following:

a cell identity of the neighboring cell;
a RSRP of a reference signal of a second network device;
a RSRQ of a reference signal of the second network device;
a signal to interference plus noise ratio SINR of a reference signal of the second network device;
predicted position information of the terminal;
a redirection time;
a confidence coefficient for redirection;
a success probability of redirection;
an AI model identifier;
a default list of AI model input parameters; and
a default value list of default values used for the AI model input parameters.

In this embodiment, the terminal inputs the target information into the artificial intelligence AI model to obtain the output result, where the target information includes the information of the service cell of the terminal and the information of the neighboring cell, and the output result includes the information of the neighboring cell to which the terminal is to be handed over, be redirected, or reestablish a connection; and the terminal determines, based on the output result, whether to be handed over, be redirected, or reestablish a connection to the neighboring cell. By utilizing the AI model, the terminal can be handed over to an appropriate cell, be redirected to an appropriate cell, or reestablish a connection to an appropriate cell, avoiding the need for frequent handover or redirection to another cell caused by improper selection of a neighboring cell. This can significantly improve the quality of mobility management, thereby enhancing the service experience.

It should be noted that the communication apparatus provided in this embodiment of this application is an apparatus capable of executing the foregoing communication method, and all embodiments of the foregoing communication method are applicable to the apparatus, with the same or similar beneficial effects achieved.

The communication apparatus provided in this embodiment of this application can implement the processes implemented in the method embodiment in FIG. 2, with the same technical effects achieved. To avoid repetition, details are not described herein again.

Referring to FIG. 6, FIG. 6 is a structural diagram of a communication apparatus according to an embodiment of this application. The communication apparatus 600 includes:

a first sending module 601, configured to send first artificial intelligence AI model information, where the first AI model information is AI model information used for cell handover, cell redirection, or cell connection reestablishment.

In an optional embodiment, the first AI model information is used to indicate at least one of the following:

an AI model identifier;
AI model status information;
an AI model activation condition;
AI model operating cycle information;
an AI model validity period;
an AI model valid area;
AI model requested time-frequency resources;
AI model structure information;
AI model parameter information;
AI model data processing method information;
first description information related to AI model input parameters, the first description information including a default identifier for each of the input parameters;
default values for the AI model input parameters; and
second description information related to AI model output parameters.

In an optional embodiment, the AI model activation condition includes at least one of the following that:

an activation message including an AI model identifier is received;

a wireless network failure message indicated by a physical layer is received;

a radio link failure occurs;

the reference signal received power RSRP of a reference signal of the first network device is less than or equal to a first threshold; and

the RSRP of a reference signal of the second network device is greater than or equal to a second threshold.

In an optional embodiment, the AI model operating cycle information includes at least one of the following:

an operating cycle of the terminal running the AI model;

a first parameter related to the radio signal measurement result of the terminal, the first parameter being used to calculate the operating cycle; and

a second parameter related to a mobility speed of the terminal, the second parameter being used to calculate the operating cycle.

In an optional embodiment, the apparatus further includes:

a third transmission module, configured to transmit load information to the terminal.

In an optional embodiment, the load information includes at least one of the following:

a physical resource block PRB utilization rate;

a radio resource control RRC connection count;

the number of stored inactive terminal sessions; and

timestamp information.

In an optional embodiment, the apparatus further includes:

a first reception module, configured to receive a handover request or indication sent by the terminal, where the handover request or indication includes at least one of the following:

a cell identity of the neighboring cell;

a RSRP of a reference signal of a second network device;

a RSRQ of a reference signal of the second network device;

a signal to interference plus noise ratio SINR of a reference signal of the second network device;

predicted position information of the terminal;

a handover time;

a confidence coefficient for handover;

a success probability of handover;

an AI model identifier;

a default list of AI model input parameters; and

a default value list of default values used for the AI model input parameters.

The first network device is a network device corresponding to the service cell, and the second network device is a network device corresponding to the neighboring cell.

In an optional embodiment, the apparatus further includes:

a second reception module, configured to receive a redirection request or indication sent by the terminal, where the redirection request or indication includes at least one of the following:

a cell identity of the neighboring cell;

a RSRP of a reference signal of a second network device;

a RSRQ of a reference signal of the second network device;

a signal to interference plus noise ratio SINR of a reference signal of the second network device;

predicted position information of the terminal;

a redirection time;

a confidence coefficient for redirection;

a success probability of redirection;

an AI model identifier;

a default list of AI model input parameters; and

a default value list of default values used for the AI model input parameters.

In this embodiment, the first network device sends the first AI model information to the terminal to assist the terminal in cell handover, cell redirection, or cell connection reestablishment. This can enable the terminal to be handed over, be redirected, or reestablish a connection to an appropriate cell, avoiding the need for frequent handover or redirection to another cell caused by improper cell selection, thereby improving communication performance.

It should be noted that the communication apparatus provided in this embodiment of this application is an apparatus capable of executing the foregoing communication method, and all embodiments of the foregoing communication method are applicable to the apparatus, with the same or similar beneficial effects achieved.

The communication apparatus provided in this embodiment of this application can implement the processes implemented in the method embodiment in FIG. 3, with the same technical effects achieved. To avoid repetition, details are not described herein again.

Referring to FIG. 7, FIG. 7 is a structural diagram of a communication apparatus according to an embodiment of this application. The communication apparatus 700 includes:

a second sending module 701, configured to send information of a neighboring cell used for cell handover, cell redirection, or cell connection reestablishment, where the information of the neighboring cell includes at least one of the following:

a cell identity of the second network device;
a service type supported by the second network device;
radio resource information supported by the second network device;
a slicing type supported by the second network device;
an angle of the boresight direction of the second network device;
load information of the second network device;
a radio signal measurement result of the second network device; and
historical information generated by the second network device in a process of serving a terminal; where
the second network device is a network device corresponding to the neighboring cell.

In an optional embodiment, the load information includes at least one of the following:

a physical resource block PRB utilization rate;
a radio resource control RRC connection count;
the number of stored inactive terminal sessions; and
timestamp information.

In an optional embodiment, the radio resource information supported by the second network device includes at least one of the following:

a bandwidth supported by the second network device;
whether the second network device supports carrier aggregation;
a carrier aggregation combination supported by the second network device;
whether the second network device supports dual connectivity; and
a dual connectivity combination supported by the second network device.

In an optional embodiment, the radio signal measurement result of the second network device includes at least one of the following:

a RSRP of a reference signal of the second network device;
a RSRQ of a reference signal of the second network device; and
a signal to interference plus noise ratio SINR of a reference signal of the second network device.

In an optional embodiment, the historical information includes at least one of the following:

a historical handover report of the terminal at the second network device;
a historical radio link failure report of the terminal at the second network device;
a random access report of the terminal at the second network device; and
a historical service status of the terminal at the second network device.

In this embodiment, the second network device sends the information of the neighboring cell to the terminal to assist the terminal in cell handover, cell redirection, or cell connection reestablishment. This can enable the terminal to be handed over, be redirected, or reestablish a connection to an appropriate cell, avoiding the need for frequent handover or redirection to another cell caused by improper cell selection, thereby improving communication performance.

It should be noted that the communication apparatus provided in this embodiment of this application is an apparatus capable of executing the foregoing communication method, and all embodiments of the foregoing communication method are applicable to the apparatus, with the same or similar beneficial effects achieved.

The communication apparatus provided in this embodiment of this application can implement the processes implemented in the method embodiment in FIG. 4, with the same technical effects achieved. To avoid repetition, details are not described herein again.

The communication apparatus in this embodiment of this application may be an apparatus or an apparatus or electronic device having an operating system, or may be a component, an integrated circuit, or a chip in a terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which are not specifically limited in the embodiments of this application.

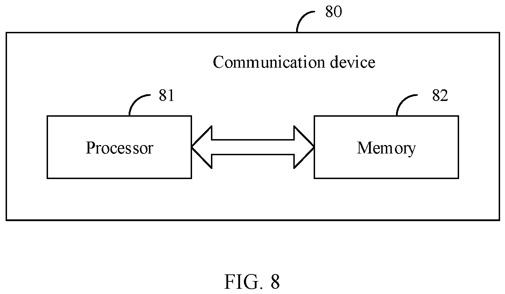

Optionally, as shown in FIG. 8, an embodiment of this application further provides a communication device 80 including a processor 81, a memory 82, and a program or instructions stored in the memory 82 and capable of running on the processor 81. For example, in a case that the communication device 80 is a terminal, when the program or instructions are executed by the processor 81, the processes of the foregoing communication method embodiment shown in FIG. 2 are implemented, with the same technical effects achieved; in a case that the communication device 80 is a network device, when the program or instructions are executed by the processor 81, the processes of the foregoing communication method embodiment shown in FIG. 3 or FIG. 4 are implemented, with the same beneficial effects achieved.

An embodiment of this application further provides a terminal, including a processor and a communication interface. The processor is configured to input target information into an artificial intelligence AI model to obtain an output result, where the target information includes information of a service cell of the terminal and information of a neighboring cell, and the output result includes information about the terminal being handed over, being redirected, or reestablishing a connection to the neighboring cell; and determine, based on the output result, whether the terminal is handed over, is redirected, or reestablishes a connection to the neighboring cell.

This terminal embodiment corresponds to the foregoing method embodiment on the terminal side. All processes and implementations in the foregoing method embodiment can be applicable to this communication device embodiment, with the same technical effect achieved.

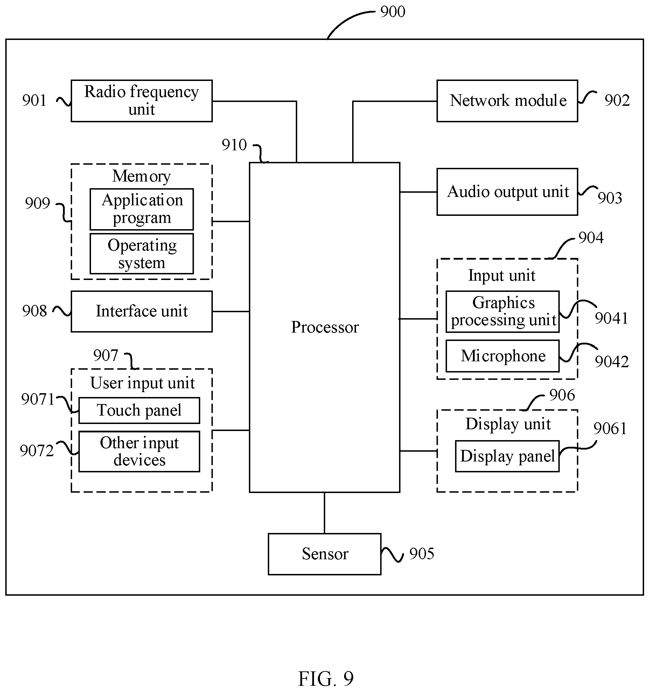

Specifically, FIG. 9 is a schematic diagram of a hardware structure of a terminal implementing the embodiments of this application.

The terminal 900 includes, but is not limited to, at least some of components such as a radio frequency unit 901, a network module 902, an audio output unit 903, an input unit 904, a sensor 905, a display unit 906, a user input unit 907, an interface unit 908, a memory 909, and a processor 910.

Persons skilled in the art can understand that the terminal 900 may further include a power supply (for example, a battery) for supplying power to the components. The power supply may be logically connected to the processor 910 through a power management system. In this way, functions such as charge management, discharge management, and power consumption management are implemented by using the power management system. The structure of the terminal shown in FIG. 9 does not constitute a limitation on the terminal. The terminal may include more or fewer components than illustrated in the figure, or combine some components, or have a different component arrangement. Details are not described herein.

It should be understood that in this embodiment of this application, the input unit 904 may include a graphics processing unit (Graphics Processing Unit, GPU) 9041 and a microphone 9042. The graphics processing unit 9041 processes image data of a static picture or a video that is obtained by an image capture apparatus (for example, a camera) in a video capture mode or an image capture mode. The display unit 906 may include a display panel 9061. The display panel 9061 may be configured in a form of a liquid crystal display, an organic light-emitting diode display, or the like. The user input unit 907 includes a touch panel 9071 and another input device 9072. The touch panel 9071 is also referred to as a touchscreen. The touch panel 9071 may include two parts: a touch detection apparatus and a touch controller. Specifically, the other input devices 9072 may include but are not limited to a physical keyboard, a function button (for example, a volume control button or on/off button), a trackball, a mouse, and a joystick. Details are not described herein.

In this embodiment of this application, the radio frequency unit 901 transmits downlink data received from a network-side device to the processor 910 for processing, and in addition, transmits uplink data to the network-side device. Generally, the radio frequency unit 901 includes but is not limited to an antenna, at least one amplifier, a transceiver, a coupler, a low noise amplifier, a duplexer, and the like.

The memory 909 may be configured to store software programs or instructions and various data. The memory 909 may include a program or instruction storage area and a data storage area. The program or instruction storage area may store an operating system, an application program or instructions required by at least one function (for example, sound play function or image play function), and the like. In addition, the memory 909 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other volatile solid-state storage device.

The processor 910 may include one or more processing units. Optionally, the processor 910 may integrate an application processor and a modem processor. The application processor mainly processes an operating system, a user interface, application programs or instructions, and the like. The modem processor mainly processes wireless communication, for example, being a baseband processor. It can be understood that a modem processor may alternatively skip being integrated in the processor 910.

The radio frequency unit 901 is configured to determine target information.

The processor 910 is configured to input target information into an artificial intelligence AI model to obtain an output result, where the target information includes information of a service cell of the terminal and information of a neighboring cell, and the output result includes information about the terminal being handed over, being redirected, or reestablishing a connection to the neighboring cell; and determine, based on the output result, whether the terminal is handed over, is redirected, or reestablishes a connection to the neighboring cell.

In this embodiment, the terminal inputs the target information into the artificial intelligence AI model to obtain the output result, where the target information includes the information of the service cell of the terminal and the information of the neighboring cell, and the output result includes the information of the neighboring cell to which the terminal is to be handed over, be redirected, or reestablish a connection; and the terminal determines, based on the output result, whether to be handed over, be redirected, or reestablish a connection to the neighboring cell. By utilizing the AI model, the terminal can be handed over to an appropriate cell, be redirected to an appropriate cell, or reestablish a connection to an appropriate cell, avoiding the need for frequent handover or redirection to another cell caused by improper selection of a neighboring cell. This can significantly improve the quality of mobility management, thereby enhancing the service experience.

It should be noted that the terminal provided in this embodiment of this application is a terminal capable of executing the foregoing communication method, and all embodiments of the foregoing communication method are applicable to the terminal, with the same or similar beneficial effects achieved.

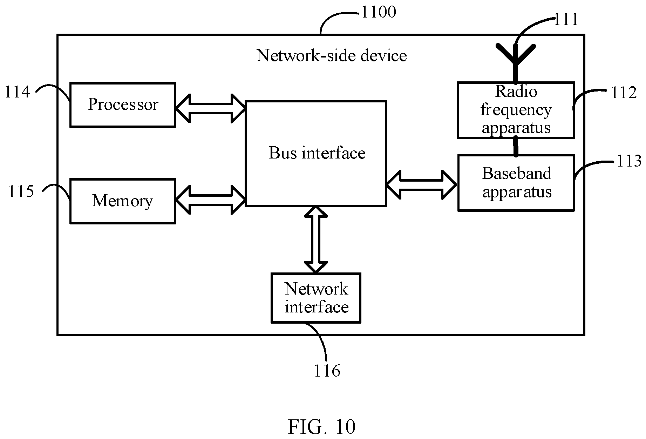

Specifically, an embodiment of this application further provides a network device. As shown in FIG. 10, the network device 1100 includes an antenna 111, a radio frequency apparatus 112, and a baseband apparatus 113. The antenna 111 is connected to the radio frequency apparatus 112. Uplink, the radio frequency apparatus 112 receives information through the antenna 111, and sends the received information to the baseband apparatus 113 for processing. Downlink, the baseband apparatus 113 processes to-be-sent information, and sends the information to the radio frequency apparatus 112; and the radio frequency apparatus 112 processes the received information and then sends the information out through the antenna 111.

The band processing apparatus may be located in the baseband apparatus 113. The method performed by the network-side device in the foregoing embodiment may be implemented in the baseband apparatus 113, and the baseband apparatus 113 includes a processor 114 and a memory 115.

The baseband apparatus 113 may include, for example, at least one baseband processing unit, where a plurality of chips are disposed on the baseband processing unit. As shown in FIG. 10, one of the chips is, for example, the processor 114, and connected to the memory 115, to invoke the program in the memory 115 to perform the operations of the network device shown in the foregoing method embodiment.

The baseband apparatus 113 may further include a network interface 116, configured to exchange information with the radio frequency apparatus 112, where the interface is, for example, a common public radio interface (Common Public Radio Interface, CPRI).

Specifically, the network-side device in this embodiment of this application further includes instructions or a program stored in the memory 115 and capable of running on the processor 114. The processor 114 invokes the instructions or program in the memory 115 to execute the method executed by the modules shown in FIGs. 6 and 7, with the same technical effects achieved. To avoid repetition, details are not described herein again.

An embodiment of this application further provides a readable storage medium. The storage medium may be non-volatile or volatile. The readable storage medium stores a program or instructions. When the program or instructions are executed by a processor, each process of the foregoing method embodiment shown in FIG. 2, FIG. 3, or FIG. 4 is implemented, with the same technical effect achieved. To avoid repetition, details are not described again herein described herein again.

The processor is a processor in the terminal described in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement the processes of the method embodiment in FIG. 2, FIG. 3 or 4, with the same technical effects achieved. To avoid repetition, details are not described herein again.

It should be understood that the chip mentioned in an embodiment of this application may also be referred to as a system-level chip, a system chip, a chip system, a system-on-chip, or the like.

It should be noted that in this specification, the terms "comprise" and "include", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially, or the part contributing to the related art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. A communication method, comprising:

   inputting, by a terminal, target information into an artificial intelligence AI model to obtain an output result, wherein the target information comprises information of a service cell of the terminal and information of a neighboring cell, and the output result comprises information about the terminal being handed over, being redirected, or reestablishing a connection to the neighboring cell; and
   determining, by the terminal based on the output result, whether to be handed over, be redirected, or reestablish a connection to the neighboring cell.

2. The method according to claim 1, wherein the information of the service cell comprises at least one of the following:

   an angle of the boresight direction of a first network device;
   load information of the first network device; and
   a radio signal measurement result of the first network device, the first network device being a network device corresponding to the service cell.

3. The method according to claim 1, wherein the information of the neighboring cell comprises at least one of the following:

   a cell identity of a second network device;
   a service type supported by the second network device;
   radio resource information supported by the second network device;
   a slicing type supported by the second network device;
   an angle of the boresight direction of the second network device;

load information of the second network device;
a radio signal measurement result of the second network device; and
historical information generated by the second network device in a process of serving the terminal; wherein
the second network device is a network device corresponding to the neighboring cell.

4. The method according to claim 1, wherein the target information further comprises information of the terminal, and the information of the terminal comprises at least one of the following:

state information of the terminal;
a prediction parameter of a service requirement type of the terminal; and
a list of historical service cell identities of the terminal.

5. The method according to claim 4, wherein the state information of the terminal comprises at least one of the following:

position information of the terminal; and
mobility information of the terminal.

6. The method according to claim 2, wherein the radio signal measurement result of the first network device comprises at least one of the following:

a reference signal received power RSRP of a reference signal of the first network device;
a reference signal received quality RSRQ of a reference signal of the first network device; and
a signal to interference plus noise ratio SINR of a reference signal of the first network device.

7. The method according to claim 3, wherein the radio signal measurement result of the second network device comprises at least one of the following:

a RSRP of a reference signal of the second network device;
a RSRQ of a reference signal of the second network device; and
a signal to interference plus noise ratio SINR of a reference signal of the second network device.

8. The method according to claim 3, wherein the historical information comprises at least one of the following:

a historical handover report of the terminal at the second network device;
a historical radio link failure report of the terminal at the second network device;
a random access report of the terminal at the second network device; and
a historical service status of the terminal at the second network device.

9. The method according to claim 2 or 3, wherein the load information comprises at least one of the following:

a physical resource block PRB utilization rate;
a radio resource control RRC connection count;
a number of stored inactive terminal sessions; and
timestamp information.

10. The method according to claim 3, wherein the radio resource information supported by the second network device comprises at least one of the following:

a bandwidth supported by the second network device;
whether the second network device supports carrier aggregation;
a carrier aggregation combination supported by the second network device;
whether the second network device supports dual connectivity; and
a dual connectivity combination supported by the second network device.

11. The method according to claim 1, wherein the AI model is determined based on first AI model information, and the first AI model information is used for indicating at least one of the following:

an AI model identifier;

AI model status information;

an AI model activation condition;

AI model operating cycle information;

an AI model validity period;

an AI model valid area;

AI model requested time-frequency resources;

AI model structure information;

AI model parameter information;

AI model data processing method information;

first description information related to AI model input parameters, the first description information comprising a default identifier for each of the input parameters;

default values for the AI model input parameters; and

second description information related to AI model output parameters.

12. The method according to claim 11, wherein the AI model activation condition comprises at least one of the following that:

an activation message including an AI model identifier is received;

a wireless network failure message indicated by a physical layer is received;

a radio link failure occurs;

the reference signal received power RSRP of a reference signal of the first network device is less than or equal to a first threshold; and

the RSRP of a reference signal of the second network device is greater than or equal to a second threshold.

13. The method according to claim 11, wherein the AI model operating cycle information comprises at least one of the following:

an operating cycle of the terminal running the AI model;

a first parameter related to a radio signal measurement result of the terminal, the first parameter being used to calculate the operating cycle; and

a second parameter related to a mobility speed of the terminal, the second parameter being used to calculate the operating cycle.

14. The method according to claim 1, wherein the output result comprises indication information, and the indication information is used for indicating whether to be handed over, be redirected, or reestablish a connection to the neighboring cell.

15. The method according to claim 14, wherein the output result further comprises at least one of the following:

predicted position information of the terminal;

whether the terminal needs to send a measurement report, the measurement report comprising at least one of the following: historical position information of the terminal, a radio signal measurement result, and the predicted position information of the terminal;

a sending time of the measurement report;

a cell identity of the neighboring cell;

a handover time of handover to the neighboring cell;

a confidence coefficient for handover to the neighboring cell;

a success probability of handover to the neighboring cell;

a redirection time of redirection to the neighboring cell;

a confidence coefficient for redirection to the neighboring cell;

a success probability of redirection to the neighboring cell;

a reestablishment time of reestablishing a connection to the neighboring cell;

a confidence coefficient for reestablishing a connection to the neighboring cell; and

a success probability of reestablishing a connection to the neighboring cell.

16. The method according to claim 15, wherein in a case that the confidence coefficient is greater than a confidence threshold, the output result is to be handed over, be redirected, or reestablish a connection to the neighboring cell.

17. The method according to claim 15, wherein the predicted position information of the terminal comprises at least one of the following:

    absolute position information;
    relative position information; and
    timestamp information corresponding to the predicted position.

18. The method according to claim 15, wherein the measurement report further comprises at least one of the following:

    an AI model identifier;
    a default list of AI model input parameters; and
    a default value list of default values used for the AI model input parameters.

19. The method according to claim 1, wherein before the determining, by the terminal, to be handed over to the neighboring cell, the method further comprises:
    sending, by the terminal, a handover request or indication to a first network device, wherein the handover request or indication comprises at least one of the following:

    a cell identity of the neighboring cell;
    a RSRP of a reference signal of a second network device;
    a RSRQ of a reference signal of the second network device;
    a signal to interference plus noise ratio SINR of a reference signal of the second network device;
    predicted position information of the terminal;
    a handover time;
    a confidence coefficient for handover;
    a success probability of handover;
    an AI model identifier;
    a default list of AI model input parameters; and
    a default value list of default values used for the AI model input parameters, wherein
    the first network device is a network device corresponding to the service cell, and the second network device is a network device corresponding to the neighboring cell.

20. The method according to claim 1, wherein before the terminal is redirected to the neighboring cell, the method further comprises:
    sending, by the terminal, a redirection request or indication to a first network device, wherein the redirection request or indication comprises at least one of the following:

    a cell identity of the neighboring cell;
    a RSRP of a reference signal of a second network device;
    a RSRQ of a reference signal of the second network device;
    a signal to interference plus noise ratio SINR of a reference signal of the second network device;
    predicted position information of the terminal;
    a redirection time;
    a confidence coefficient for redirection;
    a success probability of redirection;
    an AI model identifier;
    a default list of AI model input parameters; and
    a default value list of default values used for the AI model input parameters.

21. A communication method, comprising:
    sending, by a first network device, first artificial intelligence AI model information, wherein the first AI model information is AI model information used for cell handover, cell redirection, or cell connection reestablishment.

22. The method according to claim 21, wherein the first AI model information is used for indicating at least one of the following:

    an AI model identifier;
    AI model status information;

an AI model activation condition;
AI model operating cycle information;
an AI model validity period;
an AI model valid area;
AI model requested time-frequency resources;
AI model structure information;
AI model parameter information;
AI model data processing method information;
first description information related to AI model input parameters, the first description information comprising a default identifier for each of the input parameters;
default values for the AI model input parameters; and
second description information related to AI model output parameters.

23. The method according to claim 22, wherein the AI model activation condition comprises at least one of the following that:

an activation message including an AI model identifier is received;
a wireless network failure message indicated by a physical layer is received;
a radio link failure occurs;
the reference signal received power RSRP of a reference signal of the first network device is less than or equal to a first threshold; and
the RSRP of a reference signal of the second network device is greater than or equal to a second threshold.

24. The method according to claim 22, wherein the AI model operating cycle information comprises at least one of the following:

an operating cycle of the terminal running the AI model;
a first parameter related to a radio signal measurement result of the terminal, the first parameter being used to calculate the operating cycle; and
a second parameter related to a mobility speed of the terminal, the second parameter being used to calculate the operating cycle.

25. The method according to claim 21, wherein the method further comprises:

sending, by the first network device, load information to a terminal.

26. The method according to claim 25, wherein the load information comprises at least one of the following:

a physical resource block PRB utilization rate;
a radio resource control RRC connection count;
a number of stored inactive terminal sessions; and
timestamp information.

27. The method according to claim 21, wherein the method further comprises:
receiving, by the first network device, a handover request or indication sent by a terminal, wherein the handover request or indication comprises at least one of the following:

a cell identity of a neighboring cell;
a RSRP of a reference signal of a second network device;
a RSRQ of a reference signal of the second network device;
a signal to interference plus noise ratio SINR of a reference signal of the second network device;
predicted position information of the terminal;
a handover time;
a confidence coefficient for handover;
a success probability of handover;
an AI model identifier;
a default list of AI model input parameters; and
a default value list of default values used for the AI model input parameters, wherein

the first network device is a network device corresponding to a service cell of the terminal, and the second network device is a network device corresponding to the neighboring cell.

28. The method according to claim 21, wherein the method further comprises:
receiving, by the first network device, a redirection request or indication sent by a terminal, wherein the redirection request or indication comprises at least one of the following:

a cell identity of the neighboring cell;
a RSRP of a reference signal of a second network device;
a RSRQ of a reference signal of the second network device;
a signal to interference plus noise ratio SINR of a reference signal of the second network device;
predicted position information of the terminal;
a redirection time;
a confidence coefficient for redirection;
a success probability of redirection;
an AI model identifier;
a default list of AI model input parameters; and
a default value list of default values used for the AI model input parameters.

29. A communication method, comprising:
sending, by a second network device, information of a neighboring cell used for cell handover, cell redirection, or cell connection reestablishment, wherein the information of the neighboring cell comprises at least one of the following:

a cell identity of the second network device;
a service type supported by the second network device;
radio resource information supported by the second network device;
a slicing type supported by the second network device;
an angle of the boresight direction of the second network device;
load information of the second network device;
a radio signal measurement result of the second network device; and
historical information generated by the second network device in a process of serving a terminal; wherein
the second network device is a network device corresponding to the neighboring cell.

30. The method according to claim 29, wherein the load information comprises at least one of the following:

a physical resource block PRB utilization rate;
a radio resource control RRC connection count;
a number of stored inactive terminal sessions; and
timestamp information.

31. The method according to claim 29, wherein the radio resource information supported by the second network device comprises at least one of the following:

a bandwidth supported by the second network device;
whether the second network device supports carrier aggregation;
a carrier aggregation combination supported by the second network device;
whether the second network device supports dual connectivity; and
a dual connectivity combination supported by the second network device.

32. The method according to claim 29, wherein the radio signal measurement result of the second network device comprises at least one of the following:

a RSRP of a reference signal of the second network device;
a RSRQ of a reference signal of the second network device; and
a signal to interference plus noise ratio SINR of a reference signal of the second network device.

33. The method according to claim 29, wherein the historical information comprises at least one of the following:

a historical handover report of the terminal at the second network device;
a historical radio link failure report of the terminal at the second network device;
a random access report of the terminal at the second network device; and
a historical service status of the terminal at the second network device.

34. A communication apparatus, applied to a terminal, wherein the apparatus comprises:

an acquisition module, configured to input target information into an artificial intelligence AI model to obtain an output result, wherein the target information comprises information of a service cell of the terminal and information of a neighboring cell, and the output result comprises information about the terminal being handed over, being redirected, or reestablishing a connection to the neighboring cell; and
a determination module, configured to determine, based on the output result, whether to be handed over, be redirected, or reestablish a connection to the neighboring cell.

35. The apparatus according to claim 34, wherein the information of the service cell comprises at least one of the following:

an angle of the boresight direction of a first network device;
load information of the first network device; and
a radio signal measurement result of the first network device, the first network device being a network device corresponding to the service cell.

36. The apparatus according to claim 34, wherein the information of the neighboring cell comprises at least one of the following:

a cell identity of a second network device;
a service type supported by the second network device;
radio resource information supported by the second network device;
a slicing type supported by the second network device;
an angle of the boresight direction of the second network device;
load information of the second network device;
a radio signal measurement result of the second network device; and
historical information generated by the second network device in a process of serving the terminal; wherein the second network device is a network device corresponding to the neighboring cell.

37. A communication apparatus, applied to a first network device, wherein the apparatus comprises:
a first sending module, configured to send first artificial intelligence AI model information, wherein the first AI model information is AI model information used for cell handover, cell redirection, or cell connection reestablishment.

38. The apparatus according to claim 37, wherein the first AI model information is used for indicating at least one of the following:

an AI model identifier;
AI model status information;
an AI model activation condition;
AI model operating cycle information;
an AI model validity period;
an AI model valid area;
AI model requested time-frequency resources;
AI model structure information;
AI model parameter information;
AI model data processing method information;
first description information related to AI model input parameters, the first description information comprising a default identifier for each of the input parameters;
default values for the AI model input parameters; and
second description information related to AI model output parameters.

39. A communication apparatus, applied to a second network device, wherein the apparatus comprises:
a second sending module, configured to send information of a neighboring cell used for cell handover, cell redirection, or cell connection reestablishment, wherein the information of the neighboring cell comprises at least one of the following:

a cell identity of the second network device;
a service type supported by the second network device;
radio resource information supported by the second network device;
a slicing type supported by the second network device;
an angle of the boresight direction of the second network device;
load information of the second network device;
a radio signal measurement result of the second network device; and
historical information generated by the second network device in a process of serving a terminal; wherein the second network device is a network device corresponding to the neighboring cell.

40. A terminal, comprising a processor, a memory, and a program or instructions stored in the memory and capable of running on the processor, wherein when the program or instructions are executed by the processor, the steps of the communication method according to any one of claims 1 to 20 are implemented.

41. A network device, comprising a processor, a memory, and a program or instructions stored in the memory and capable of running on the processor, wherein when the program or instructions are executed by the processor, the steps of the communication method according to any one of claims 21 to 28 or the steps of the communication method according to any one of claims 29 to 33 are implemented.

42. A readable storage medium, wherein the readable storage medium stores a program or instructions, and when the program or the instructions are executed by a processor, the steps of the communication method according to any one of claims 1 to 20 are implemented, the steps of the communication method according to any one of claims 21 to 28 are implemented, or the steps of the communication method according to any one of claims 29 to 33 are implemented.

FIG. 1

Start

A terminal inputs target information into an artificial intelligence AI model to obtain an output result, where the target information includes information of a service cell of the terminal and information of a neighboring cell, and the output result includes information about the terminal being handed over, redirected, or reestablishing a connection to the neighboring cell

201

The terminal determines, based on the output result, whether to be handed over, be redirected, or reestablish a connection to the neighboring cell

202

End

FIG. 2

Start

A first network device sends first artificial intelligence AI model
information, where the first AI model information is AI model
information used for cell handover, cell redirection, or cell
connection reestablishment

301

End

FIG. 3

Start

A second network device sends information of a neighboring cell
used for cell handover, cell redirection, or cell connection
reestablishment

401

End

FIG. 4

Communication apparatus

Acquisition module — 501

Determination module — 502

500

FIG. 5

Communication apparatus

First sending module — 601

600

FIG. 6

Communication apparatus

Second sending module — 701

700

FIG. 7

80

Communication device

81

Processor

82

Memory

FIG. 8

900

Radio frequency
unit — 901

Network module — 902

910

Memory — 909
Application
program
Operating
system

Audio output unit — 903

904
Input unit
Graphics
processing unit — 9041
Microphone — 9042

Interface unit — 908

Processor

User input unit — 907
Touch panel — 9071
Other input
devices — 9072

906
Display unit — 9061
Display panel

Sensor — 905

FIG. 9

FIG. 10

## INTERNATIONAL SEARCH REPORT

| | International application No. |
|---|---|
| | **PCT/CN2022/126133** |

| A. | CLASSIFICATION OF SUBJECT MATTER |
|---|---|
| | H04W 36/08(2009.01)i; H04W 36/00(2009.01)i |

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT; CNKI; EPODOC; WPI; 3GPP: 人工智能, 模型, 终端, 输入, 输出, 参数, 位置, 标志, 标识, 小区, 服务, 相邻, 切换, 重定向, 重建, 测量, 历史, 参考信号, artificial intelligence, AI, model, terminal, input, output, parameter, location, flag, identity, ID, cell, service, neighbor, handover, redirection, reestablishment, measurement, history, reference signal

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021123285 A1 (SONY CORP. et al.) 24 June 2021 (2021-06-24) description, paragraphs 15, 45, and 68-166, and figures 5-6 | 1-42 |
| A | CN 111567091 A (HUAWEI TECHNOLOGIES CO., LTD.) 21 August 2020 (2020-08-21) entire document | 1-42 |
| A | CN 113498137 A (HUAWEI TECHNOLOGIES CO., LTD.) 12 October 2021 (2021-10-12) entire document | 1-42 |
| A | CN 111615141 A (VIVO COMMUNICATION TECHNOLOGY CO., LTD.) 01 September 2020 (2020-09-01) entire document | 1-42 |
| A | ZTE et al. "Solution to AI based UE Trajectory prediction" *3GPP TSG-RAN WG3 #112-e R3-212029*, 28 May 2021 (2021-05-28), entire document | 1-42 |
| A | CMCC. "TP for AIRAN_MobilitySolution" *3GPP TSG-RAN WG3 Meeting #113electronic R3-21xxxx*, 26 August 2021 (2021-08-26), entire document | 1-42 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 November 2022** | **27 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/126133**

| Patent document cited in search report | | | Publication date (day/month/year) | Patent family member(s) | | | Publication date (day/month/year) |
|---|---|---|---|---|---|---|---|
| WO | 2021123285 | A1 | 24 June 2021 | EP | 4079038 | A1 | 26 October 2022 |
| | | | | CN | 114788348 | A | 22 July 2022 |
| CN | 111567091 | A | 21 August 2020 | WO | 2020077517 | A1 | 23 April 2020 |
| | | | | US | 2022007260 | A1 | 06 January 2022 |
| CN | 113498137 | A | 12 October 2021 | None | | | |
| CN | 111615141 | A | 01 September 2020 | WO | 2020207435 | A1 | 15 October 2020 |
| | | | | KR | 20210147051 | A | 06 December 2021 |
| | | | | US | 2022030457 | A1 | 27 January 2022 |
| | | | | EP | 3955627 | A1 | 16 February 2022 |

Form PCT/ISA/210 (patent family annex) (January 2015)

**REFERENCES CITED IN THE DESCRIPTION**

**Patent documents cited in the description**

• CN 202111229129